# EUROPÄISCHE PATENTSCHRIFT

(11) **EP 1 777 085 B1**
(45) Veröffentlichungstag und Bekanntmachung des Hinweises auf die Patenterteilung: **03.10.2012**
(21) Anmeldenummer: 06021617.3
(22) Anmeldetag: 16.10.2006
(51) Int. Cl.: B60G 7/02, B60G 9/00, B62D 21/11

(54) **Achsaufhängung für eine längslenkergeführte Fahrzeugachse**
Axle suspension for trailing arms carrying a vehicle axle
Suspension d'essieu pour bras tirés portant un essieu

(30) Priorität: 18.09.2006 DE 102006044402; 21.10.2005 DE 102005050923
(43) Veröffentlichungstag der Anmeldung: 25.04.2007
(73) Patentinhaber: BPW Bergische Achsen KG, 51674 Wiehl (DE)
(72) Erfinder: Kopplow, Hans Werner, 51588 Nümbrecht (DE); Michels, Manfred, 51067 Köln (DE); Ebert, Jörg, 50858 Köln (DE); Rossenbach, Bernhard, 51674 Wiehl (DE); Schwarz, Michael, 51469 Bergisch Gladbach (DE)
(74) Vertreter: Christophersen & Partner

(56) Entgegenhaltungen:
- EP-A1- 0 995 664
- EP-A1- 1 481 824
- EP-B1- 1 057 716
- DE-U1- 20 300 428

## Beschreibung

Die Erfindung betrifft Achsaufhängungen für längeslenkergeführte Fahrzeugachsen mit den im Oberbegriff des Anspruchs 1 angegebenen Mermalen.

Bei der Auslegung von Achskonstruktionen für Nutzfahrzeuge und insbesondere für luftgefederte Achskonstruktionen müssen die zum Beispiel bei Kurvenfahrt auftretenden Seitenkräfte in das Fahrzeugchassis abgeleitet werden. Zu diesem Zweck ist es z.B. aus der EP 1 481 824 A1 oder der DE 203 00 428 U1 bekannt, die unter dem Fahrzeugchassis befestigte und den Längslenker führende Stütze über eine schräg verlaufende Strebe nach innen hin abzustützen. Zu diesem Zweck sind die Streben mit ihren oberen Enden an einer Traverse des Fahrzeugchassis befestigt. Die unteren Enden der Streben sind mit der zur Fahrzeugmitte weisenden Wandung der Stütze verschweißt, im Falle der Konstruktion nach der EP 1 481 824 A1 unter Verwendung zusätzlicher Verbindungsstücke.

Ein demgegenüber variiertes Konzept ist in der EP 1 057 716 B1 beschrieben. Hierbei wird jede der beiden Stützen über vorgespannte Streben diagonal gegenüber der jeweils anderen Fahrzeugseite verspannt. Zur Aufrechterhaltung einer dauernden Vorspannung sind in den Streben starke Federpakete angeordnet. Diese ermöglichen eine elastische Aufnahme der sich zwangsläufig einstellenden Rahmendeformationen.

Der Erfindung liegt die **Aufgabe** zugrunde, die z.B. bei Kurvenfahrt des Fahrzeuges auftretenden Seitenkräfte unter Einsatz konstruktiv einfacher Mittel und unter Verwendung möglichst weniger Einzelteile sicher in das Fahrzeugchassis abzuführen. Angestrebt wird ferner die Möglichkeit einer Nachrüstung vorhandener, herkömmlicher Achsaufhängungen.

Zur Lösung dieser Aufgabe wird eine Achsaufhängung für längslenkergeführte Fahrzeugachsen mit den in Anspruch 1 angegebenen Merkmalen vorgeschlagen.

Vorteilhafte Ausgestaltungen einer solcherart ausgebildeten Achsaufhängung sind in den Unteransprüchen angegeben.

Durch die Verwendung eines Bolzens erhält man eine Art Gelenk, wodurch Biegemomente in dem Verbindungsbereich vermieden werden, wie sie z.B. im Falle einer Schweißverbindung nicht zu verhindern sind..

Von Vorteil ist ferner, wenn das obere Ende der Strebe an einem Querholm befestigt ist, welcher zwei Längsträger des Fahrzeugchassis miteinander verbindet. Vorzugsweise ist das obere Ende der Strebe mit dem Querholm verschraubt.

Die Strebe kann ein mindestens eine rechtwinklige Abkantung aufweisendes Profil sein. Eine solche Strebe, welche z.B. als L-Profil oder als C-Profil ausgestaltet sein kann, zeichnet sich durch eine erhöhte Knicksteifigkeit unter Druckbelastung aus.

Ein Druckstab kann sich horizontal zwischen den beiden Stützen erstrecken. Dieser dient dazu, den Abstand zwischen der Stütze auf der linken und der Stützte auf der rechten Fahrzeugseite stets konstant zu halten, d.h. die beiden Stützten gegeneinander abzustützen. Zur Vermeidung von Biegemomenten im Verbindungsbereich sind die Enden des Druckstabes mit dem Bolzenkopf verschraubt oder verbolzt, wobei sich die Verschraubung oder Verbolzung in Fahrzeuglängsrichtung erstreckt.

Mit einer weiteren Ausgestaltung wird als Zug- und Druckstrebe ein Flachstahl vorgeschlagen, der an seinem stützenseitigen Ende mit einer Bohrung zur Hindurchführung der Verschraubung versehen ist. In diesem Fall ist es zur Erzielung niedriger Produktions- und Lagerkosten von Vorteil, wenn beide Streben einschließlich der einstückig daran angeformten Befestigungsstrukturen identisch gestaltet sind.

Mit einer weiteren Ausgestaltung wird vorgeschlagen, dass die Verschraubung derart mit einem Anzugsmoment angezogen ist, dass die Strebe reibschlüssig gegen den Bolzenkopf gepresst wird. Auf diese Weise ist eine Momentenübertragung von der Stütze auf die jeweilige Zug- und Druckstrebe möglich,

Mit einer weiteren Ausgestaltung wird vorgeschlagen, dass das obere Ende der Strebe mit Bohrungen zur Hindurchführung einer Verschraubung mit dem Fahrzeugchassis versehen ist, und die Bohrungen einen deutlich größeren Durchmesser aufweisen, als der Durchmesser des hindurchgeführten Schraubelementes der Verschraubung. Auf diese Weise ist ein leichtes Fügen der Teile auch bei mäßigen Toleranzen möglich.

Weitere Einzelheiten und Vorteile werden nachfolgend anhand der auf der Zeichnung dargestellten Ausführungsbeispiele erläutert. Es zeigen:
- Fig. 1: in Seitenansicht eine Achskonstruktion eines luftgefederten Nutzfahrzeuganhängers;
- Fig. 2: in einer ersten Ausführungsform die Achskonstruktion nach Fig. 1 in einer Ansicht von vorne;
- Fig. 3: die Gegenstände nach Fig. 2 in einer leicht perspektivischen Ansicht;
- Fig.4: in einer zweiten Ausführungsform die Achskonstruktion nach Fig. 1 in einer Ansicht von vorne;
- Fig. 5: in einer dritten Ausführungsform die Achskonstruktion nach Fig. 1 in einer Ansicht von vorne;
- Fig. 6: die Gegenstände nach Fig. 5 in einer leicht perspektivischen Ansicht und
- Fig. 7: eine für die Verschraubung verwendete Mutter mit integriertem Drehteller in einer teilweise geschnittenen Darstellung.

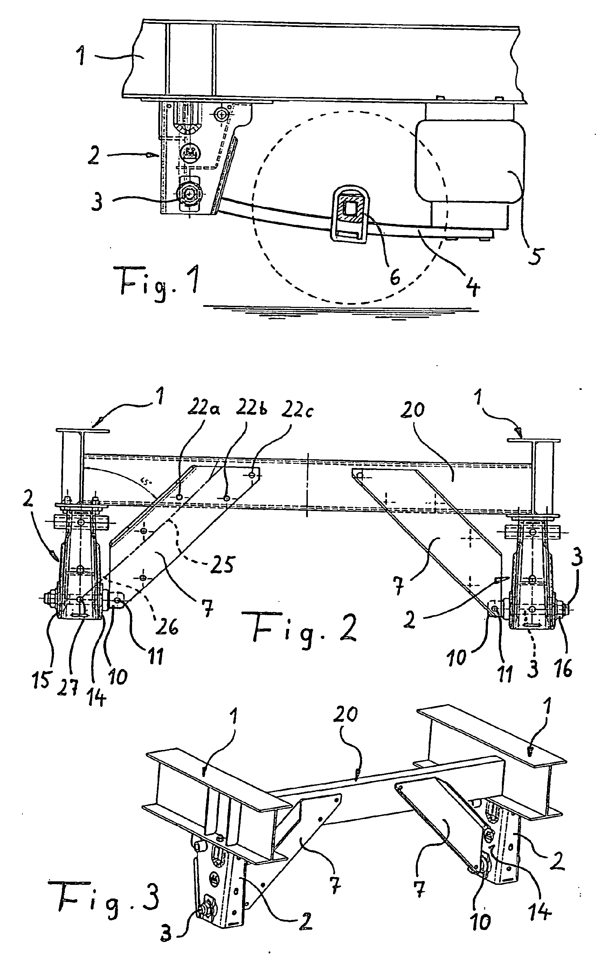

Die Fig. 1 zeigt in Seitenansicht eine Achskonstruktion für einen Nutzfahrzeuganhänger mit unter den in Fahrzeuglängsrichtung verlaufenden Längsträgern 1 des Fahrzeugchassis montierten Stützen 2 mit durch die Stützen 2 hindurchgeführten Anlenkbolzen 3 für die Längslenker 4. An seinem anderen, hinteren Ende stützt sich jeder Längslenker 4 über eine Luftfeder 5 an dem jeweiligen Längsträger 1 des Fahrzeugchassis ab. An beiden Längslenkern 4 ist das hier durchgehende Achsrohr 6 der Fahrzeugachse befestigt. Beim Ausführungsbeispiel ist der Längslenker 4 eine Lenkerfeder. Ebenso kann als Längslenker 4 ein Kastenlenker Anwendung finden.

Die beiden Längsträger 1 des Fahrzeugchassis sind, wie im Fahrzeugbau häufig anzutreffen, Doppel-T-Träger. Mehrere Achsaggregate der in Fig. 1 dargestellten Art können hintereinander unter dem Fahrzeugchassis angeordnet sein.

Fig. 2 lässt erkennen, wie sowohl die auf der linken als auch die auf der rechten Fahrzeugseite angeordnete Stütze 2 erfindungsgemäß seitlich, nämlich zur Fahrzeugmitte hin, abgestrebt ist. Hierzu ist für jede der beiden Stützen eine diagonale, auf Zug wie auf Druck belastbare Strebe 7 vorhanden, die jeweils mit ihrem einen, schräg unteren Ende im Bereich der Stütze und mit ihrem anderen, schräg oberen Ende im Bereich des Fahrzeugchassis befestigt sind. Allerdings ist das stützenseitige Ende der Strebe 7 an der Stütze 2 nicht unmittelbar befestigt, zum Beispiel durch Anschweißen an der Stütze, sondern an dem durch die Stütze 2 quer hindurchgeführten Anlenkbolzen 3, welcher die gelenkige Verbindung zwischen der Stütze 2 und der Lenkerfeder 4 herstellt. Der Anlenkbolzen 3 ist zu diesem Zweck mit einem vergrößerten Bolzenkopf 10 versehen, an dem das untere Ende der Zugstrebe 7 mittels z.B. einer Verschraubung oder einer Verbolzung 11 befestigt ist. Erstreckt sich ein solcher Bolzen 11 in Fahrzeuglängsrichtung, so können keine nennenswerten Biegemomente zwischen Strebe und Stütze auftreten.

Die blockhaft gestalteten Stützen verfügen jeweils über eine Innenwand 14 und eine Außenwand 15, die sich beide, ebenso wie die Stütze 2 selbst, in etwa vertikal erstrecken. Der Anlenkbolzen 3 ist quer zur Fahrzeuglängsrichtung durch die Stütze 2 hindurchgeführt und von solcher Länge, dass er sowohl die Innenwand 14 wie die Außenwand 15 durchdringt. An der Außenwand 15 ist auf den Anlenkbolzen 3 eine Mutter 16 aufgeschraubt, wozu der Anlenkbolzen 3 in diesem Bereich mit einem Gewinde versehen ist. An seinem inneren Ende ist der Anlenkbolzen 3 mit dem vergrößerten Bolzenkopf 10 versehen. Der Anlenkbolzen stützt sich daher mit dem Bolzenkopf 10 gegen die Innenwand 14 der Stütze ab. Zwecks Hindurchführung der sich in Fahrzeuglängsrichtung erstreckenden Verschraubung 11 ist der Bolzenkopf 10 mit einer entsprechenden Bohrung versehen. Die Verschraubung 11 durchdringt daher sowohl den Bolzenkopf 10, wie auch das nach schräg unten auslaufende Ende der jeweiligen Strebe 7. Dieses nach schräg unten auslaufende Ende der Strebe ist in etwa dreieckig gestaltet, um so den zur Verfügung stehenden Bauraum bestmöglich auszunutzen.

Das andere, obere Ende der Strebe 7 ist über vorzugsweise mehrere Verschraubungen mit einem Querholm 20 verbunden. Der Querholm 20 verbindet die beiden Längsträger 1 des Fahrzeugchassis miteinander. Beim Ausführungsbeispiel erfolgt diese Verbindung über insgesamt drei Verschraubungen 22 a, 22 b, 22 c. Die Anbindung der Strebe 7 an den Querholm 20 erfolgt daher im wesentlichen starr und ohne Gelenkigkeit, wohingegen sich durch eine Verschraubung oder Verbolzung 11 am unteren Ende der Strebe 7 dort eine gewisse gelenkige Verbindung erzielen lässt. Durch entsprechend starkes Anziehen der Verschraubung 11 lässt sich alternativ aber auch eine feste Verbindung erzielen, falls dies gewünscht ist. Die beiden Streben 7 sind beim Ausführungsbeispiel als kurze Stahlprofile gestaltet. Aus Gründen der Illustrierung ist in den Fig. 2 und 3 die jeweils links dargestellte Strebe 7 ein L-Profil, und die jeweils rechts dargestellte Strebe 7 ein C-Profil. Beide Profilquerschnitte weisen daher mindestens eine rechtwinklige Abkantung auf und zeichnen sich auf diese Weise durch eine im Vergleich zu einem Flachstahl erhöhte Knickfestigkeit aus.

Von besonderer Bedeutung bei der Konstruktion und Befestigung der beiden Streben 7 ist die Lage der neutralen Faser 25 bei Biegung und Knickung. Wie Fig. 2 erkennen lässt, schneidet die gedachte Verlängerung 26 der neutralen Faser 25 der Strebe den Anlenkbolzen 3 an einem Ort 27. Dieser Ort 27 befindet sich in einer vertikalen Ebene, die sich zwischen der Ebene der Innenwand 14 und der Ebene der Außenwand 15 der Stütze 2 befindet. Vorzugsweise befindet sich der Ort 27 in der Mitte zwischen den beiden Seitenwänden 14,15. Vorausgesetzt wird hierbei eine Betrachtung der Achsaufhängung wie in Fig. 2 dargestellt, d.h. eine Ansicht der Achsaufhängung in Fahrzeuglängsrichtung oder entgegen der Fahrzeuglängsrichtung.

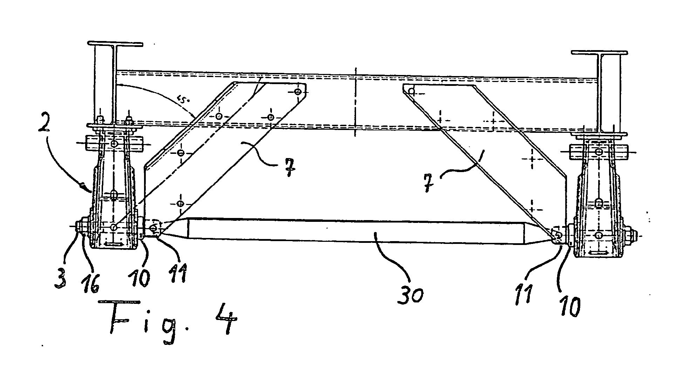

In Fig. 4 ist eine zweite Ausführungsform dargestellt. Zusätzlich vorhanden ist ein Druckstab 30, welcher sich horizontal zwischen den beiden Stützen 2 erstreckt. Die Enden des Druckstabes 30 sind mit dem jeweiligen Bolzenkopf 10 verschraubt oder verbolzt. Dies erfolgt vorzugsweise über dieselben Verschraubungen 11, welche auch die Streben 7 mit den Bolzenköpfen 10 verbinden.

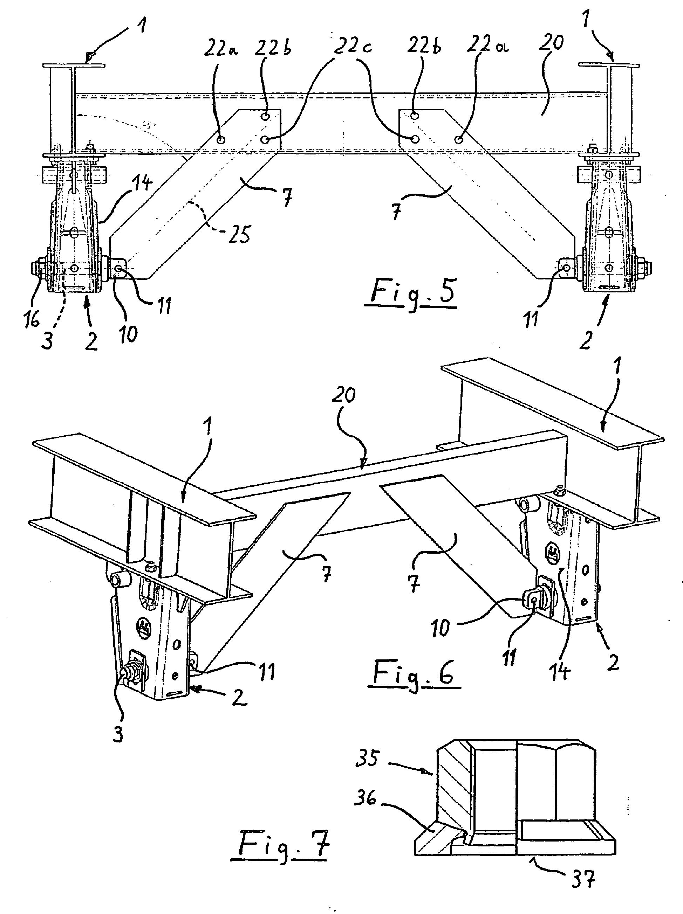

In den Fign. 5 6 und 7 ist eine dritte Ausführungsform dargestellt. Einander entsprechende Teile sind mit denselben Bezugszeichen versehen, wie bei der ersten Ausführungsform nach den Fign. 1, 2 und 3.

Wiederum sind die beiden Stützen 2 über diagonale Zug- und Druckstreben 7, deren Winkel zur Vertikalen ca. 45 ° beträgt, zur Fahrzeugmitte hin abgestrebt. An dem Querträger 20 des Fahrzeugchassis ist jede Zug- und Druckstrebe über mehrere Verschraubungen, hier drei Verschraubungen 22a, 22b, 22c befestigt. Wiederum ist das stützenseitige Ende jeder Strebe 7 nicht unmittelbar an der Innenwand 14 der Stütze befestigt, sondern im Abstand von der Innenwand 14 an dem Bolzenkopf 10 des durch die Stütze 2 quer hindurchgeführten Anlenkbolzens 3. Die Verbindung erfolgt hier wiederum über eine Verschraubung 11, deren Achse sich in Fahrzeuglängsrichtung erstreckt.

Abweichend gestaltet ist hingegen die Strebe 7. Diese besteht bei der Ausführungsform nach den Fign. 5 und 6 aus einem Flachstahl, z. B. einer Stahlplatte mit einer Dicke von 8 mm, deren Flachseiten in Fahrtrichtung bzw. gegen die Fahrtrichtung weisen. Von Vorteil bei der Verwendung der flachen Zug- und Druckstrebe 7 ist, dass beide Streben 7 einschließlich der einstückig daran angeformten Befestigungsstrukturen für die verschiedenen Verschraubungen identisch gestaltet sind. Dies reduziert die Herstellungskosten sowie die Lagerhaltung beim Hersteller.

Jede Strebe 7 hat die Grundgestalt eines länglichen Rechtecks, dessen an dem Querträger 20 sowie an dem Bolzenkopf 10 befestigte Enden in etwa dreieckig gestaltet sind, d.h. spitz auslaufen. Das obere Ende der Strebe ist zur Verbindung mit dem Querträger 20 mit drei Bohrungen versehen. Durch diese drei Bohrungen sind die Verschraubungen 22a, 22b, 22c hindurchgesetzt. Hierbei weisen die Bohrungen in den Streben 7 einen deutlich größeren Durchmesser auf, als der Durchmesser des hindurchgeführten Schraubelementes der Verschraubung 22a, 22b, 22c. Auf diese Weise können bei der Montage der Strebe 7 etwaige Winkeltoleranzen zwischen Querholm 20 und Stütze 2 ausgeglichen werden.

An ihrem stützenseitigen Ende ist die Strebe 7 mit lediglich einer Bohrung versehen. Durch diese Bohrung ist die Verschraubung 11 mit dem Bolzenkopf 10 hindurchgeführt. Diese Verschraubung 11 kann mit einem so großen Anzugsmoment angezogen sein, dass die Strebe 7 nicht mehr gelenkig zu dem Anlenkbolzen 3 ist, sondern sie reibschlüssig gegen den Bolzenkopf 10 gepresst wird. Dieser Reibschluss wird durch hohe Anzugskräfte mit einer erzielten Vorspannkraft bis zu 150 KN erreicht. In diesem Zusammenhang kann für die Verschraubung 11 die in Fig. 7 im Teilschnitt dargestellte Mutter 35 verwendet werden. Diese ist mit einem integrierten Drehteller 36 versehen, der eine große Anlagefläche 37 für die Anlage an der Zug- und Druckstrebe 7 aufweist.

### Bezugszeichenliste

- 1: Längsträger
- 2: Stütze
- 3: Anlenkbolzen
- 4: Längslenker
- 5: Luftfeder
- 6: Achsrohr
- 7: Zug- und Druckstrebe
- 10: Bolzenkopf
- 11: Verschraubung, Verbolzung
- 14: Innenwand der Stütze
- 15: Außenwand der Stütze
- 16: Mutter
- 20: Querholm
- 22 a: Verschraubung
- 22 b: Verschraubung
- 22 c: Verschraubung
- 25: neutrale Faser
- 26: gedachte Verlängerung der neutralen Faser
- 27: Ort
- 30: Druckstab
- 35: Mutter
- 36: Drehteller
- 37: Anlagefläche

## Patentansprüche

1. Achsaufhängung für eine längslenkergeführte Fahrzeugachse, mit einer auf jeder Fahrzeugseite unter dem Fahrzeugchassis befestigten, der Anlenkung eines Längslenkers dienenden Stütze (2), sowie einer mit ihrem einen Ende an dem Fahrzeugchassis befestigten und sich von dort schräg zu der Stütze (2) hinunter erstreckenden Zug- und Druckstrebe (7), wobei
das chassisseitige Ende der Strebe (7) im Wesentlichen starr und ohne Gelenkigkeit an dem Fahrzeugchassis angebunden ist, **dadurch gekennzeichnet, dass** das stützenseitige Ende der Strebe (7) an einem Bolzenkopf (10) eines quer zur Fahrzeuglängsrichtung durch die Stütze (2) hindurchgeführten Anlenkbolzens (3) für den Längslenker befestigt ist, wobei sich der Bolzenkopf (10) außerhalb der Stütze (2) an deren Innenseite befindet, und Bolzenkopf (10) und Strebe (7) über eine sich in Fahrzeuglängsrichtung erstreckende Verschraubung (11) verbunden sind.

2. Achsaufhängung nach Anspruch 1, **gekennzeichnet durch** einen Flachstahl als Zug- und Druckstrebe (7), der an seinem stützenseitigen Ende mit einer Bohrung zur Hindurchführung der Verschraubung (11) versehen ist.

3. Achsaufhängung nach Anspruch 1 oder Anspruch 2, **dadurch gekennzeichnet, dass** beide Streben (7) einschließlich der einstückig daran angeformten Befestigungsstrukturen identisch gestaltet sind.

4. Achsaufhängung nach einem der vorangehenden Ansprüche, **dadurch gekennzeichnet, dass** die Verschraubung (11) derart mit einem Anzugsmoment angezogen ist, dass die Strebe (7) reibschlüssig gegen den Bolzenkopf (10) gepresst wird.

5. Achsaufhängung nach einem der vorangehenden Ansprüche, **dadurch gekennzeichnet, dass** Bestandteil der Verschraubung (11) eine Mutter (35) mit integriertem Drehteller (36) ist.

6. Achsaufhängung nach einem der vorangehenden Ansprüche, **dadurch gekennzeichnet, dass** das obere Ende der Strebe (7) mit Bohrungen zur Hindurchführung einer Verschraubung (22a 22b, 22c) mit dem Fahrzeugchassis versehen ist, und dass die Bohrungen einen deutlich größeren Durchmesser aufweisen, als der Durchmesser des hindurchgeführten Schraubelementes der Verschraubung (22a, 22b, 22c).

## Claims

1. An axle suspension for a vehicle axle guided by trailing arms, with a support (2) fastened under the vehicle chassis on each side of the vehicle and used for the linking of a trailing arm, and a tension and compression strut (7) fastened at one end thereof to the vehicle chassis and extending downwards from there obliquely to the support (2), wherein the end of the strut (7) towards the chassis is attached to the vehicle chassis in a substantially rigid manner and without flexibility, **characterized in that** the end of the strut (7) towards the support is fastened to a head (10) of a link pin (3) extending through the support (2) transversely to the longitudinal direction of the vehicle for the trailing arm, wherein the pin head (10) is situated outside the support (2) on the inner side thereof, and the pin head (10) and the strut (7) are connected by way of a screw fastening (11) extending in the longitudinal direction of the vehicle.

2. An axle suspension according to Claim 1, **characterized by** a flat steel bar as the tension and compression strut (7) which is provided on the end thereof towards the support with a bore for the passage of the screw fastening (11).

3. An axle suspension according to Claim 1 or Claim 2, **characterized in that** the two struts (7) including the fastening structures integrally formed in one piece thereon are made identical.

4. An axle suspension according to any one of the preceding Claims, **characterized in that** the screw fastening (11) is tightened with a tightening torque in such a way that the strut (7) is pressed against the pin head (10) with friction locking.

5. An axle suspension according to any one of the preceding Claims, **characterized in that** a nut (35) with an integrated rotary disc (36) is a component of the screw fastening (11).

6. An axle suspension according to any one of the preceding Claims, **characterized in that** the upper end of the strut (7) is provided with bores for the passage of a screw fastening (22a, 22b, 22c) to the vehicle chassis, and the bores have a significantly larger diameter than the diameter of the screw element of the screw fastening (22a, 22b, 22c) passed through.

## Revendications

1. Suspension d'essieu pour un essieu de véhicule guidé par des bras oscillants longitudinaux, comportant un support (2) fixé de chaque côté du véhicule, sous le châssis, et servant à l'articulation d'un bras oscillant longitudinal ainsi qu'une entretoise de traction et de compression (7) fixée sur le châssis par une extrémité et partant du châssis pour rejoindre le bas du support (2), à l'oblique, sachant que l'extrémité située côté châssis de l'entretoise (7) est reliée de manière sensiblement fixe et sans articulation au châssis, **caractérisée en ce que** l'extrémité de l'entretoise (7) située côté support est fixée sur une tête (10) d'un goujon d'articulation (3), pour le bras oscillant longitudinal, inséré dans le support (2) perpendiculairement au sens longitudinal du véhicule, sachant que la tête de goujon (10) se trouve à l'extérieur du support (2), sur sa face interne, et que la tête de goujon (10) et l'entretoise (7) sont reliées par le biais d'un raccord à vis (11) s'étendant dans le sens longitudinal du véhicule.

2. Suspension d'essieu selon la revendication 1, **caractérisée par** une pièce en acier plat sous la forme d'une entretoise de traction et de compression (7) qui est pourvue, sur son extrémité située côté support, d'un alésage pour l'insertion du raccord à vis (11).

3. Suspension d'essieu selon la revendication 1 ou la revendication 2, **caractérisée en ce que** les deux entretoises (7) sont réalisées de manière identique, y compris au niveau des structures de fixation réalisées d'un seul tenant dessus.

4. Suspension d'essieu selon l'une quelconque des revendications précédentes, **caractérisée en ce que** le raccord à vis (11) est serré à un couple de serrage tel que l'entretoise (7) est pressée contre la tête de goujon (10) par friction.

5. Suspension d'essieu selon l'une quelconque des revendications précédentes, **caractérisée en ce qu'**un écrou (35) avec plateau tournant (36) intégré fait partie intégrante du raccord à vis (11).

6. Suspension d'essieu selon l'une quelconque des revendications précédentes, **caractérisée en ce que** l'extrémité supérieure de l'entretoise (7) est pourvue d'alésages pour l'insertion d'un raccord à vis (22a, 22b, 22c) avec le châssis et **en ce que** les alésages présentent un diamètre sensiblement plus grand que le diamètre de l'élément inséré du raccord à vis (22a, 22b, 22c).
